# EUROPEAN PATENT APPLICATION

(11) **EP 4 674 714 A1**
(43) Date of publication of application: **07.01.2026**
(21) Application number: 25185062.4
(22) Date of filing: 25.06.2025
(51) Int. Cl.: B60W 20/50, B60W 50/00, B60W 50/02, F02D 41/14, F02D 41/22, F02D 41/26, G07C 5/00, G07C 5/08

(54) **A CONTROL UNIT AND METHOD THEREIN FOR DETECTING CHANGES IN OPERATION OF A POWERTRAIN OF A HEAVY-DUTY VEHICLE**

(30) Priority: 02.07.2024 SE 2450750
(71) Applicant: Volvo Penta Corporation, 405 08 Göteborg (SE)
(72) Inventor: LINDGREN, Ronny, 436 44 Göteborg (SE)
(74) Representative: Zacco Sweden AB

(57) **Abstract**

A control unit and a method therein for detecting changes in operation of a powertrain of a heavy-duty vehicle is provided. The control unit obtains information indicating that at least one powertrain sensor signal monitoring sequence is to be performed, and obtains a set of vehicle powertrain operation parameter settings to be applied during the at least one powertrain sensor signal monitoring sequence. The control unit then controls the operation of the powertrain of the heavy-duty vehicle according to the obtained set of vehicle powertrain operation parameter settings for a determined time period. The control unit also determines virtual sensor values based on sensor signals from one or more powertrain sensors, wherein the sensor signals are obtained during said determined time period. Further, the control unit detects a change in the operation of the powertrain of the heavy-duty vehicle in case the determined virtual sensor values indicate a different operation of the powertrain of the heavy-duty vehicle as compared to previously determined virtual sensor values using the same at least one powertrain sensor signal monitoring sequence.

## Description

### TECHNICAL FIELD

The disclosure relates generally to powertrain monitoring. In particular aspects, the disclosure relates to an electronic control unit and a computer-implemented method for detecting changes in operation of a powertrain of a heavy-duty vehicle. Although the disclosure may be described with respect to a particular heavy-duty vehicle, the disclosure is not restricted to any particular vehicle.

### BACKGROUND

In modern day vehicles, whether comprising a combustion engine and/or a battery- or fuel-cell electric power source, a vehicle's powertrain is commonly monitored by several different types of specialized sensors. Each of the different types of specialized sensors normally have a certain task to monitor a specific part, condition or function of the powertrain or engine, and provide a dedicated sensor information indicative for its task. Conventionally, the specialized sensors measure and feedback their sensor information to an on-board control system. The on-board control system is thus able to receive this sensor information and use it to continuously attempt to optimize the performance of the powertrain or engine/power source therein. For example, to maximize the power output of the powertrain or its engine/power source, to minimize engine emission output, to minimize its power source's energy outtake, etc. This may, for example, be performed dependent on which vehicle operations strategy is currently applied.

In particular, based on the multiple received sensor information, the on-board control system may, for example, determine a current state of the powertrain or engine. Based on the determined current state, the on-board control system may, for example, accordingly adjust different actuator set values or component settings of the powertrain or engine to compensate for unpredicted events, changes or failures of any subsystem or components. This in order to achieve optimized operation of the powertrain or engine.

However, while the multiple received sensor information is useful in optimizing operation of the powertrain or engine, the multiple received sensor information may not be particularly adapted to discover certain operational changes or malfunctions in the powertrain or engine. Hence, additional and often costly powertrain or engine sensors usually needs to be designed for this purpose. These additional powertrain or engine sensors then also needs to be mounted on the powertrain or engine and arranged to communicate with the on-board control system which adds to the complexity and difficulty of implementing such solutions.

### SUMMARY

According to a first aspect of embodiments herein, a computer-implemented method for detecting changes in operation of a powertrain of a heavy-duty vehicle is disclosed. The method comprises obtaining information indicating that at least one powertrain sensor signal monitoring sequence is to be performed. The method also comprises obtaining a set of vehicle powertrain operation parameter settings to be applied during the at least one powertrain sensor signal monitoring sequence. Further, the method comprises controlling the operation of the powertrain of the heavy-duty vehicle according to the obtained set of vehicle powertrain operation parameter settings for a determined time period. Also, the method comprises determining virtual sensor values based on sensor signals from one or more powertrain sensors, wherein the sensor signals are obtained during said determined time period. Furthermore, the method comprises detecting a change in the operation of the powertrain of the heavy-duty vehicle in case the determined virtual sensor values indicate a different operation of the powertrain of the heavy-duty vehicle as compared to previously determined virtual sensor values using the same at least one powertrain sensor signal monitoring sequence.

The first aspect of the disclosure may seek to provide simple and cost-effective way of detecting changes in operation of a powertrain of a heavy-duty vehicle. A technical benefit may include improved operation of the powertrain, improved determination of required maintenance operations of the vehicle, and increased driver interaction to prevent driving operations that may lead to severe damages or costly maintenance actions. The method may be performed by a control unit of the vehicle.

Optionally in some examples, including in at least one preferred example, the method comprises identifying one or more operating characteristics or conditions of one or more powertrain components involved in the operation of the powertrain of the heavy-duty vehicle that is causing the detected change in the operation of the powertrain of the heavy-duty vehicle based the determined virtual sensor values. In this case, the method may also comprise providing, to a driver of the heavy-duty vehicle and/or a remote vehicle monitoring system to which the heavy-duty vehicle is connected, information indicating the identified one or more operating characteristics or conditions of one or more powertrain components. Here, a technical benefit may include that one or more operating characteristics or conditions of one or more powertrain components involved in the operation of the powertrain of the heavy-duty vehicle that may not previously have been able to be identified now are; and by providing information indicating this to the driver or a monitoring system enable the driver or monitoring system to become aware that the change has taken place and that an appropriate action should be taken.

Optionally in some examples, including in at least one preferred example, the method comprises transmitting, to a remote vehicle monitoring system to which the heavy-duty vehicle is connected, information indicating the determined virtual sensor values. Here, a technical benefit may include that the information may be sent to a centralized location off-board the vehicle where it may be effectively processed and analysed.

Optionally in some examples, including in at least one preferred example, the method comprises receiving, from the remote vehicle monitoring system, information indicating information indicating the identified one or more operating characteristics or conditions of one or more powertrain components that is causing the detected change in the operation of the powertrain of the heavy-duty vehicle. In this case, the method may also comprise providing, to a driver of the heavy-duty vehicle, information indicating the identified one or more operating characteristics or conditions of one or more powertrain components. Here, a technical benefit may include that the information may be effectively processed and analysed at a remote location, whereby an appropriate action or notifications for the vehicle and/or driver may be determined and sent back to the vehicle. This enables the vehicle and/or the driver to take appropriate steps in accordance with the received recommended action or notification.

Optionally in some examples, including in at least one preferred example, a machine learning model is trained to identify the one or more operating characteristics or conditions of one or more powertrain components involved in the operation of the powertrain of the heavy-duty vehicle that is causing the detected change in the operation of the powertrain of the heavy-duty vehicle based the determined virtual sensor values and the previously determined virtual sensor values. Here, a technical benefit may include that the determined virtual sensor values and the previously determined virtual sensor values in a heavy-duty vehicle may be used to train an Al/Machine Learning, Al/ML, algorithm to identify one or more operating characteristics or conditions of one or more powertrain components involved in the operation of the powertrain of a heavy-duty vehicle that is causing the detected change in the operation of the powertrain of the heavy-duty vehicle. Hence, in subsequent operation, determined virtual sensor values and previously determined virtual sensor values may be used, e.g. on-board or off-board the heavy-duty vehicle, as input to a trained version of the Al/ML algorithm, whereby the output of the trained Al/ML algorithm may be the identification of the one or more operating characteristics or conditions of one or more powertrain components involved in the operation of the powertrain of the heavy-duty vehicle that is causing the detected change in the operation of the powertrain of the heavy-duty vehicle.

Optionally in some examples, including in at least one preferred example, each of the at least one powertrain sensor signal monitoring sequence is associated with a time period, information indicating the virtual sensor values to be determined based on the sensor signals, and a set of vehicle powertrain operation parameter settings. Here, a technical benefit may include that one or several powertrain sensor signal monitoring sequences may be defined or tailored to provide virtual sensor values that may be used to specifically identify certain operating characteristics or conditions of one or more powertrain components involved in the operation of the powertrain of the heavy-duty vehicle.

Optionally in some examples, including in at least one preferred example, the one or more operating characteristics or conditions of one or more powertrain components comprise damaged or malfunctioning powertrain components. Here, a technical benefit may include that some damaged or malfunctioning powertrain components may be difficult to identify using other means, and hence particularly well-suited to be identified by the method described herein.

Optionally in some examples, including in at least one preferred example, the powertrain of the heavy-duty vehicle is a battery-electric or fuel-cell electric powertrain. Optionally, the powertrain of the heavy-duty vehicle comprise a combustion engine. Here, a technical benefit may include that the method may be applied to any powertrain composition independent of whether it comprises a combustion engine or is battery-driven.

Optionally in some examples, including in at least one preferred example, the one or more operating characteristics or conditions of one or more powertrain components comprise a change in fuel composition. Here, a technical benefit may include that these type of changes in fuel composition may be difficult to identify using other means, and hence particularly well-suited to be identified by the method described herein.

Optionally in some examples, including in at least one preferred example, the set of vehicle powertrain operation parameter settings comprise one or more of: a predetermined setting of an injection system timing, a predetermined setting of an injection pressure, a predetermined setting of an injection strategy, a predetermined setting of intake- and exhaust pressures, and a predetermined setting of a charge air temperature. Here, a technical benefit may include that several changes in operation of powertrains of heavy-duty vehicles that comprise combustion engines may be easily identified by the set of vehicle powertrain operation parameter settings described above.

According to a second aspect of embodiments herein, a control unit for detecting changes in operation of a powertrain of a heavy-duty vehicle is disclosed. The control unit comprise a processing circuitry and a memory. The processing circuitry is configured to obtain information indicating that at least one powertrain sensor signal monitoring sequence is to be performed. The processing circuitry is also configured to obtain a set of vehicle powertrain operation parameter settings to be applied during the at least one powertrain sensor signal monitoring sequence. Further, the processing circuitry is also configured to control the operation of the powertrain of the heavy-duty vehicle according to the obtained set of vehicle powertrain operation parameter settings for a determined time period. Also, the processing circuitry is configured to determine virtual sensor values based on sensor signals from one or more powertrain sensors, wherein the sensor signals are obtained during said determined time period. Furthermore, the processing circuitry is configured to detect a change in the operation of the powertrain of the heavy-duty vehicle in case the determined virtual sensor values indicate a different operation of the powertrain of the heavy-duty vehicle as compared to previously determined virtual sensor values using the same at least one powertrain sensor signal monitoring sequence.

Optionally in some examples, including in at least one preferred example, the processing circuitry may be further configured to identify one or more operating characteristics or conditions of one or more powertrain components involved in the operation of the powertrain of the heavy-duty vehicle that is causing the detected change in the operation of the powertrain of the heavy-duty vehicle. The processing circuitry may further be configured to provide, to a driver of the heavy-duty vehicle and/or a remote vehicle monitoring system to which the heavy-duty vehicle is connected, information indicating the identified one or more operating characteristics or conditions of one or more powertrain components.

Optionally in some examples, including in at least one preferred example, the processing circuitry may be further configured to transmit, to a remote vehicle monitoring system to which the heavy-duty vehicle is communicatively connected, information indicating the determined virtual sensor values.

Optionally in some examples, including in at least one preferred example, the processing circuitry may be further configured to receive, from the remote vehicle monitoring system, information indicating the identified one or more operating characteristics or conditions of one or more powertrain components that is causing the detected change in the operation of the powertrain of the heavy-duty vehicle. The processing circuitry may further be configured to provide, to a driver of the heavy-duty vehicle, information indicating the identified one or more operating characteristics or conditions of one or more powertrain components.

Optionally in some examples, including in at least one preferred example, the processing circuitry may be further configured with a machine learning model trained to identify the one or more operating characteristics or conditions of one or more powertrain components involved in the operation of the powertrain of the heavy-duty vehicle that is causing the detected change in the operation of the powertrain of the heavy-duty vehicle based the determined virtual sensor values and the previously determined virtual sensor values.

Optionally in some examples, including in at least one preferred example, each of the at least one powertrain sensor signal monitoring sequence is associated with a time period, information indicating the virtual sensor values to be determined based on the sensor signals, and a set of vehicle powertrain operation parameter settings.

Optionally in some examples, including in at least one preferred example, the one or more operating characteristics or conditions of one or more powertrain components comprise damaged or malfunctioning powertrain components.

Optionally in some examples, including in at least one preferred example, the powertrain of the heavy-duty vehicle is a battery-electric or fuel-cell electric powertrain. Optionally, the powertrain of the heavy-duty vehicle comprise a combustion engine.

Optionally in some examples, including in at least one preferred example, the one or more operating characteristics or conditions of one or more powertrain components comprise a change in fuel composition.

Optionally in some examples, including in at least one preferred example, the set of vehicle powertrain operation parameter settings comprise one or more of: a predetermined setting of an injection system timing, a predetermined setting of an injection pressure, a predetermined setting of an injection strategy, a predetermined setting of intake- and exhaust pressures, and a predetermined setting of a charge air temperature.

According to a third aspect of embodiments herein, a computer program product comprising program code for performing, when executed by processing circuitry of the control unit, the method as described above is disclosed.

According to a fourth aspect of embodiments herein, a non-transitory computer-readable storage medium comprising instructions, which when executed by the processing circuitry, cause the processing circuitry to perform the method as described above is disclosed.

The above aspects, accompanying claims, and/or embodiments disclosed herein above and later below may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
**FIG. 1** show an example of a heavy-duty vehicle.
**FIG. 2** is a flowchart depicting a method for detecting changes in operation of a powertrain of a heavy-duty vehicle.
**FIG. 3** is a block diagram depicting an example of a control unit.
**FIG. 4** is a schematic illustration of an example computer system.

### DETAILED DESCRIPTION

Aspects set forth below represent the necessary information to enable those skilled in the art to practice the disclosure.

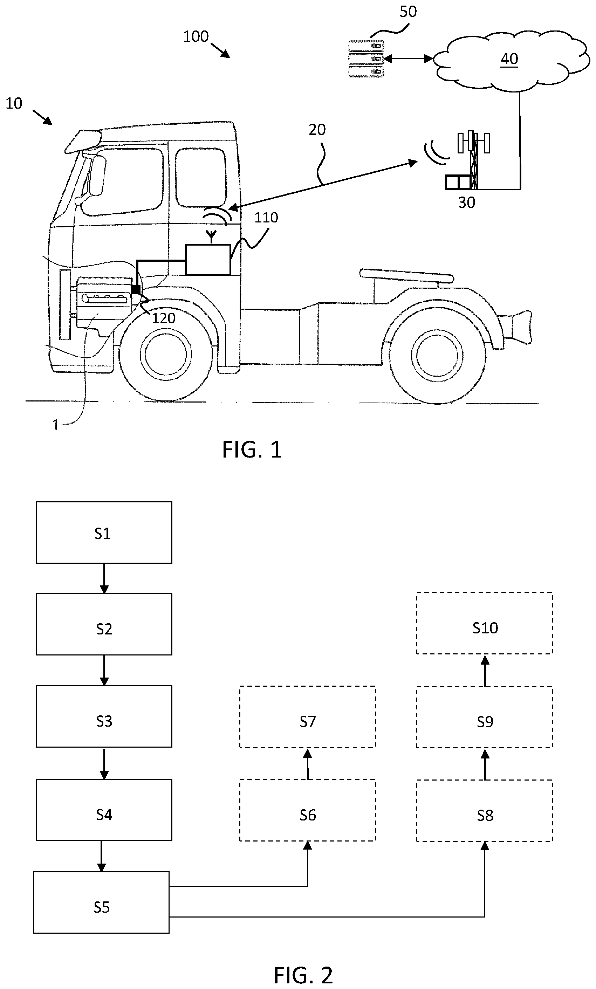

**FIG. 1** illustrate an example of a **vehicle 10.** The vehicle 10 may be a heavy-duty vehicle, such as, for example, a truck, a trailer, a buss or a construction equipment. The vehicle 10 may also refer to other types of vehicles, such as, wheel loaders, articulated haulers, excavators, backhoe loaders, passenger cars, marine vessels, general working machines, etc. For the sake of simplicity, the term vehicle will be used herein when referring to any of the above examples of vehicles.

As shown in FIG. 1, the vehicle 10 comprise **a control unit 110.** The control unit 110 is arranged on-board the vehicle 10 and may also be referred to as an Electronic Control Unit, ECU. The control unit 110 may, for example, be arranged to connect and communicate over a **wireless communications network 100** via a **wireless connection 20.** The wireless communication network 100 may comprise a **mobile base station 30** that is connected to a **remote vehicle monitoring system 50** via a **communication network 40,** such as, e.g. the Internet. The remote vehicle monitoring system 50 may also, if implemented using a cloud server or service, be referred to as a cloud service vehicle monitoring system.

The control unit 110 is arranged to be connected wired or wirelessly to **one or more powertrain sensors 120** on-board the vehicle 10. The one or more powertrain sensor 120 are sensors that are primarily used to monitor a powertrain of the vehicle 10 and provide sensor information to an on-board control system (not shown) in the control unit 110. The on-board control system in the control unit 110 is arranged to receive the sensor information from the one or more powertrain sensors 120 and use the sensor information to continuously optimize the performance of the powertrain or engine/power source in the vehicle 10. In other words, the one or more powertrain sensors 120 primary use is to, through direct sensor measurements, monitor the current behaviour and state of the powertrain or engine of the vehicle 10.

In Fig. 1, the **powertrain 1** of the vehicle 10 may herein refer to the powertrain components that is able to generate power and transfer that power to propel the vehicle 10 forward. The powertrain 1 of the vehicle 10 may comprise a combustion engine, transmission, drive shafts, differentials and the final drive (e.g. drive wheels). Optionally, the powertrain 1 of the vehicle 10 may be a hybrid powertrain that also comprise one or more electric traction motors that operate to drive the vehicle wheels. Alternatively, the powertrain 1 of the vehicle 10 may be fully-electric powertrain comprising solely electric motors for propulsion. For the latter two cases, the powertrain 1 of the vehicle 10 may also comprise a battery- or fuel-cell electric power source for powering the electric motors. Excluding engines or motors from the powertrain, the remainder of components of the powertrain are commonly referred to as the driveline or drivetrain.

As part of the developing of the embodiments described herein, it has been realized that there is a need for sensor information that is adapted to discover certain operational changes or malfunctions in the powertrain or engine. Since durable and reliable sensors are often expensive and sometimes difficult to mount on the powertrain or engine, it has also been realized that there is a possibility to use so-called "virtual", or "soft", sensors instead. These virtual sensors may be constructed by models or functions in an on-board control unit that is able to take received real sensor information into account when monitoring different engine parameters. In other words, they may utilize the conventionally monitored engine parameters to calculate and monitor virtual parameters. However, since the on-board control system for the powertrain or engine have the ability to adjust the operating parameters of the powertrain or engine to compensate for an external changes, and thus actively change the operational conditions of the powertrain or engine, these virtual sensors need some form of calibration to function and detect any abnormal powertrain or engine states. Once calibrated, virtual sensors, e.g. trained based on advanced data analytics, have the potential to capture different powertrain or engine phenomena that are conventionally difficult to capture with traditional real sensors.

This is address by embodiments herein by, for example, operating a powertrain or engine for certain fixedly set operating conditions during a designated time period or window. During this designated time period or window, the operation conditions may comprise operating the powertrain or engine with, for example, a pre-determined setting of the injection system timing and injection strategy, a pre-determined setting of intake- and exhaust pressure, and/or with other pre-determined set parameters that is influencing the operation of the powertrain or engine. This enables on-board virtual sensors to detect changes in, for example, the current operation of the powertrain as compared to previous comparable reference operations of the powertrain, an engine's combustion characteristics as compared to previous comparable combustion characteristics of the engine, the current powertrain or engine operation in relation to a reference case with a standard fuel, etc. This type of calibration process or phase may, for example, be triggered several times a day to capture different phenomena or changes to the powertrain or engine. This may, for example, be used to reveal that an engine is being operated with a different or incorrect fuel blend and/or different component malfunctions.

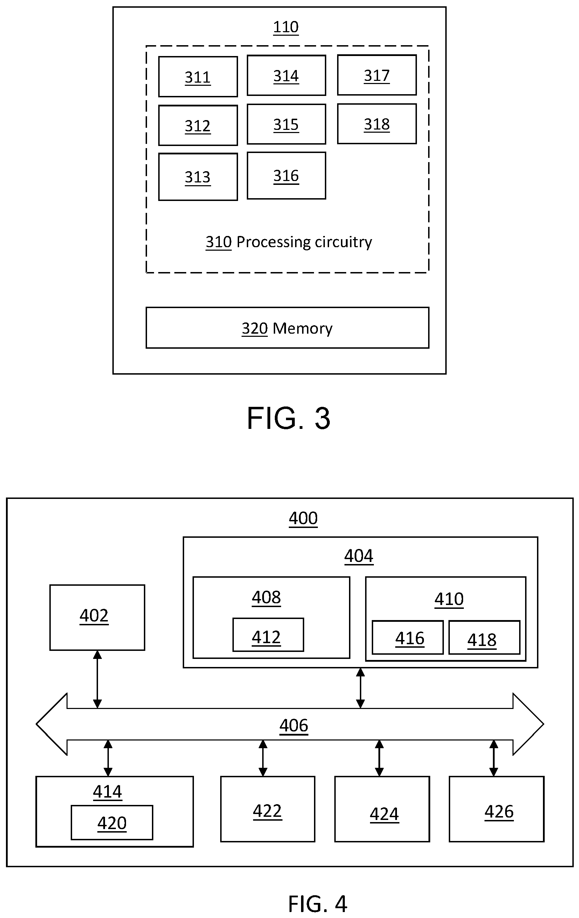

Examples of embodiments of a computer-implemented method for detecting changes in operation of a powertrain 1 of a heavy-duty vehicle 10, will now be described with reference to the flowchart depicted in **FIG.** 3. FIG. 3 is an illustrated example of actions or operations which may be taken by a control unit 110 as described above on-board a heavy-duty vehicle 10. It should also be noted that some or all of the functionality described herein as being performed by the control unit 110 may be provided by the computer system 400 and the processing circuitry 402 executing instructions stored on a computer-readable medium, such as, e.g., the memory 404 shown in Fig. 4. According to some embodiments, the powertrain 1 of the heavy-duty vehicle 10 may be a battery-electric or fuel-cell electric powertrain. Optionally, the powertrain 1 of the heavy-duty vehicle 10 may comprise a combustion engine 1. The method may comprise the following actions.

**Action S1.** The control unit 110 obtains information indicating that at least one powertrain sensor signal monitoring sequence is to be performed. This means, for example, that the control unit 110 may obtain information indicating that now is a suitable time to perform a certain powertrain sensor signal monitoring sequence, i.e. to perform a calibration of one or more of its virtual sensors. This information may, for example, be automatically provided in the control unit 110 in that the control unit 110 identifies that now is good time for the vehicle 10 to perform the calibration, e.g. during a start-up sequence of the powertrain 1 or during a time period wherein the powertrain 1 is in active idle mode, etc. Optionally, this information may also be provided by a driver of the vehicle 10. This may, for example, be performed in response to a prompt from the control unit 110 asking if now is a good time to perform the calibration.

**Action S2.** After obtaining the information in Action S1, the control unit 110 obtains a set of vehicle powertrain operation parameter settings to be applied during the at least one powertrain sensor signal monitoring sequence. This means, for example, that the control unit 110 may retrieve or receive the set of vehicle powertrain operation parameter settings associated with the at least one powertrain sensor signal monitoring sequence. The set of vehicle powertrain operation parameter settings associated with the at least one powertrain sensor signal monitoring sequence may, for example, be pre-configured in the control unit 110 and be retrieved by the control unit 110 based on the received information in Action S1 identifying the at least one powertrain sensor signal monitoring sequence.

According to some embodiments, each of the at least one powertrain sensor signal monitoring sequence may be associated with a determined time period, information indicating the virtual sensor values to be determined based on the sensor signals, and a set of vehicle powertrain operation parameter settings. This means, for example, that the control unit 110 may be arranged with one or several different powertrain sensor signal monitoring sequences that it may run at different points in time for different periods of time with different sets of vehicle powertrain operation parameter settings in order to enable different virtual sensor value to be obtained. Each of the one or several different powertrain sensor signal monitoring sequences may thus be associated with dedicated configuration information that defines how the at least one powertrain sensor signal monitoring sequence is to be performed. For example, for how long should the powertrain sensor signal monitoring sequence run, which virtual sensor values are to be calculated and thus determined, and which sets of vehicle powertrain operation parameter settings should be applied by the powertrain 1 during the powertrain sensor signal monitoring sequence. The configuration information may, for example, be pre-configured in the control unit 110 or downloadable by the control unit 110 from the remote vehicle monitoring system 50.

Here, according to some embodiments, the set of vehicle powertrain operation parameter settings may comprise one or more of: a predetermined setting of an injection system timing, a predetermined setting of an injection pressure, a predetermined setting of an injection strategy, a predetermined setting of intake- and exhaust pressures, and a predetermined setting of a charge air temperature. This means, for example, that the control unit 110, in case the powertrain 1 of the heavy-duty vehicle 10 comprise a combustion engine 1, may use specific engine parameter settings during the at least one powertrain sensor signal monitoring sequence.

**Action S3.** After obtaining the set of vehicle powertrain operation parameter settings in Action S2, the control unit 110 controls operation of the powertrain 1 of the heavy-duty vehicle 10 according to the obtained set of vehicle powertrain operation parameter settings for a determined time period. This means, for example, that the control unit 110 may start the at least one powertrain sensor signal monitoring sequence and operate the powertrain 1 of the heavy-duty vehicle 10 according to the associated set of vehicle powertrain operation parameter settings for a certain suitable time period associated with the at least one powertrain sensor signal monitoring sequence.

**Action S4.** During or after the controlling of the operation of the powertrain 1 in Action S3, the control unit 110 determines virtual sensor values based on sensor signals from one or more powertrain sensors 120, wherein the sensor signals are obtained during said determined time period. This means, for example, that the control unit 110 may receive sensor signals from one or more of the powertrain sensors 120 that may be used to determine the virtual sensor values. Thus, the virtual sensor values are based on the sensor signals obtained during the determined time period during which the powertrain 1 of the heavy-duty vehicle 10 is operated according to the set of vehicle powertrain operation parameter settings associated with the at least one powertrain sensor signal monitoring sequence. The control unit 110 uses the received sensor signals that are needed to calculate, and thus determine, the one or more virtual sensor values. The virtual sensor values may, for example, be a mathematical formula, function or algorithm that uses the sensor signals as input in order to determine the one or more virtual sensor values as output.

**Action S5.** After monitoring the one or more sensor signals from one or more powertrain sensors 120 for the time period in Action S4, the control unit 110 may detect a change in the operation of the powertrain 1 of the heavy-duty vehicle 10 in case the determined virtual sensor values indicate a different operation of the powertrain 1 of the heavy-duty vehicle 10 as compared to previously determined virtual sensor values using the same at least one powertrain sensor signal monitoring sequence. This means, for example, that the control unit 110 is able to detect when a change in the operation of the powertrain 1 is taking place, since it may compare the current virtual sensor values with historic virtual sensor values that has been calculated from sensor signals obtained during similar powertrain operation conditions and thus are comparable with each other.

**Action S6.** Optionally, after detecting a change in the operation of the powertrain 1 of the heavy-duty vehicle 10 in Action S5, the control unit 110 may identify one or more operating characteristics or conditions of one or more powertrain components involved in the operation of the powertrain 1 of the heavy-duty vehicle 10 that is causing the detected change in the operation of the powertrain 1 of the heavy-duty vehicle 10. This means, for example, that the control unit 110 may determine if the detected change in the operation of the powertrain 1 indicates a serious fault or problem, and if so, what could be the cause of this fault or problem. Here, according to some embodiments, a machine learning model may be trained to identify the one or more operating characteristics or conditions of one or more powertrain components involved in the operation of the powertrain 1 of the heavy-duty vehicle 10 that is causing the detected change in the operation of the powertrain 1 of the heavy-duty vehicle 10 based the determined virtual sensor values and the previously determined virtual sensor values. This means, for example, that the control unit 110 may be arranged to efficiently identify a cause of a fault or problem with the powertrain 1 from a variety of different causes based on the determined virtual sensor values. According to some embodiments, the one or more operating characteristics or conditions of one or more powertrain components may comprise damaged or malfunctioning powertrain components. This means, for example, that the control unit 110 may identify the cause of a fault or problem to be one or more damaged or malfunctioning powertrain components. Here, for example, the determined virtual sensor values may be specifically adapted to indicate whether or not there is a serious fault or problem with one or more damaged or malfunctioning powertrain components exists in the powertrain 1. Here, it should be noted that there are numerous different ways of determining if there is a serious fault or problem with one or more damaged or malfunctioning powertrain components based on which combination of sensors are present, or is added, for a particular engine. According to some embodiments, the one or more operating characteristics or conditions of one or more powertrain components may comprise a change in fuel composition. This means, for example, that the control unit 110 may, in case the powertrain 1 of the heavy-duty vehicle 10 comprise a combustion engine 1, identify the cause of a fault or problem to be that the wrong or sub-optimal fuel is being used for the heavy-duty vehicle 10.. Here, for example, the determined virtual sensor values may be specifically adapted to indicate whether or not there is a serious fault or problem with the fuel being used for the powertrain 1 of the heavy-duty vehicle 10. Here, it should be noted that there are several ways of determining that the wrong fuel is being used based on which combination of sensors are present, or is added, for a particular engine. According to one example, since different fuels combust in different ways in an engine, this may cause different kinds of vibrations in the engine (e.g. due to different pressure pulses being created) that may be measured through e.g. a knock-sensor. Hence, these vibrations may be used by the virtual sensors in order to determine if there is a shift in the combustion of the engine. Other sensor inputs that also may be used by virtual sensors to generate the determined virtual sensor values in order to determine that the wrong fuel is being used may here comprise, for example, the temperature of the exhaust gases being emitted from the engine and/or pressure differences in the exhaust pipe".

**Action S7.** In case of identifying one or more operating characteristics or conditions of one or more powertrain components in Action S6, the control unit 110 may provide to a driver of the heavy-duty vehicle 10 and/or a remote vehicle monitoring system 50 to which the heavy-duty vehicle 10 is connected, information indicating the identified one or more operating characteristics or conditions of one or more powertrain components. This means, for example, that the control unit 110 is able to warn the driver of the heavy-duty vehicle 10 that something is wrong with one or more powertrain components in the powertrain 1 of the heavy-duty vehicle 10 based on the identified one or more operating characteristics or conditions of one or more powertrain components involved in the operation of the powertrain 1 of the heavy-duty vehicle 10.

**Action S8.** Alternatively, after detecting a change in the operation of the powertrain 1 of the heavy-duty vehicle 10 in Action S5, the control unit 110 may transmit, to a remote vehicle monitoring system 50 to which the heavy-duty vehicle 10 is connected, information indicating the determined virtual sensor values. This means, for example, that the control unit 110 may send its determined virtual sensor values to a remote location for processing. Hence, the on-board data processing capacity of the control unit 110 may effectively off-loaded to be able to perform other tasks instead.

**Action S9.** In case of transmitting the information in Action S8, the control unit 110 may receive, from the remote vehicle monitoring system 50, information indicating information indicating the identified one or more operating characteristics or conditions of one or more powertrain components that is causing the detected change in the operation of the powertrain 1 of the heavy-duty vehicle 10. This means, for example, that the control unit 110 may receive information about which powertrain component in the powertrain 1 of the heavy-duty vehicle 10 is malfunctioning or damaged. Similarly in this case, the remote vehicle monitoring system 50 may comprise a machine learning model that has been trained to identify the one or more operating characteristics or conditions of one or more powertrain components involved in the operation of the powertrain 1 of the heavy-duty vehicle 10 that is causing the detected change in the operation of the powertrain 1 of the heavy-duty vehicle 10 based the determined virtual sensor values and the previously determined virtual sensor values. This means, for example, that a remote vehicle monitoring system 50 may also be arranged to efficiently identify a cause of a fault or problem with the powertrain 1 from a variety of different causes based on the determined virtual sensor values.

**Action S10.** In case of receiving the information in Action S9, the control unit 110 may provide, to a driver of the heavy-duty vehicle 10, information indicating the identified one or more operating characteristics or conditions of one or more powertrain components. This means, for example, that the control unit 110 is able to warn the driver of the heavy-duty vehicle 10 that something is wrong with one or more powertrain components based on the information received from the remote vehicle monitoring system 50.

To perform the method actions in a control unit 110 for detecting changes in operation of a powertrain 1 of a heavy-duty vehicle 10, the control unit 110 may comprise the following arrangement depicted in **FIG** 3. FIG 3 shows a schematic block diagram of embodiments of the control unit 110. The embodiments of the control unit 110 described herein may be considered as independent examples, or may be considered in any combination with each other to describe non-limiting examples.

The control unit 110 may comprise **processing circuitry 310** and a **memory 320.** It should also be noted that some or all of the functionality described in the examples above as being performed by the control unit 110 may be provided by the processing circuitry 310 executing instructions stored on a computer-readable medium, such as, the memory 320 shown in FIG. 3. The processing circuitry 310 may also comprise an **obtaining module 311,** a **controlling module 312,** a **monitoring module 313,** a **detecting module 314,** an **identification module 315,** an **providing module 316,** a **transmitting module 317,** and a **receiving module 318,** each responsible for providing its functionality to support the examples described herein.

The control unit 110 or processing circuitry 310 is configured to, or may comprise the obtaining module 311 configured to, obtain information indicating that at least one powertrain sensor signal monitoring sequence is to be performed. The control unit 110 or processing circuitry 310 is also configured to, or may comprise the obtaining module 311 configured to, obtain a set of vehicle powertrain operation parameter settings to be applied during the at least one powertrain sensor signal monitoring sequence. The control unit 110 or processing circuitry 310 is further configured to, or may comprise the controlling module 312 configured to, control the operation of the powertrain 1 of the heavy-duty vehicle 10 according to the obtained set of vehicle powertrain operation parameter settings for a determined time period. Furthermore, the control unit 110 or processing circuitry 310 is further configured to, or may comprise the monitoring module 313 configured to, determine virtual sensor values based on sensor signals from one or more powertrain sensors 120, wherein the sensor signals are obtained during said determined time period. Yet further, the control unit 110 or processing circuitry 310 is further configured to, or may comprise the monitoring module 313 configured to, detect a change in the operation of the powertrain 1 of the heavy-duty vehicle 10 in case the determined virtual sensor values indicate a different operation of the powertrain 1 of the heavy-duty vehicle 10 as compared to previously determined virtual sensor values using the same at least one powertrain sensor signal monitoring sequence.

In some embodiments, the control unit 110 or processing circuitry 310 may further be configured to, or may comprise the identification module 315 configured to, identify one or more operating characteristics or conditions of one or more powertrain components involved in the operation of the powertrain 1 of the heavy-duty vehicle 10 that is causing the detected change in the operation of the powertrain 1 of the heavy-duty vehicle 10. In this case, the control unit 110 or processing circuitry 310 may further be configured to, or may comprise the providing module 316 configured to, provide, to a driver of the heavy-duty vehicle 10 and/or a remote vehicle monitoring system 50 to which the heavy-duty vehicle 10 is connected, information indicating the identified one or more operating characteristics or conditions of one or more powertrain components.

In some embodiments, the control unit 110 or processing circuitry 310 may further be configured to, or may comprise the transmitting module 317 configured to, transmit, to a remote vehicle monitoring system 50 to which the heavy-duty vehicle 10 is communicatively connected, information indicating the determined virtual sensor values.

In some embodiments, the control unit 110 or processing circuitry 310 may further be configured to, or may comprise the receiving module 318 configured to, receive, from the remote vehicle monitoring system 50, information indicating information indicating the identified one or more operating characteristics or conditions of one or more powertrain components that is causing the detected change in the operation of the powertrain 1 of the heavy-duty vehicle 10. In this case, the control unit 110 or processing circuitry 310 may further be configured to, or may comprise the providing module 316 configured to, provide, to a driver of the heavy-duty vehicle 10, information indicating the identified one or more operating characteristics or conditions of one or more powertrain components.

In some embodiments, the control unit 110 or processing circuitry 310 may further be configured with, or may comprise the identification module 315 configured with, a machine learning model trained to identify the one or more operating characteristics or conditions of one or more powertrain components involved in the operation of the powertrain 1 of the heavy-duty vehicle 10 that is causing the detected change in the operation of the powertrain 1 of the heavy-duty vehicle 10 based the determined virtual sensor values and the previously determined virtual sensor values.

In some embodiments, each of the at least one powertrain sensor signal monitoring sequence may be associated with a determined time period, information indicating the virtual sensor values to be determined based on the sensor signals, and a set of vehicle powertrain operation parameter settings. In some embodiments, the one or more operating characteristics or conditions of one or more powertrain components comprise damaged or malfunctioning powertrain components. In some embodiments, the powertrain 1 of the heavy-duty vehicle 10 may be a battery-electric or fuel-cell electric powertrain.

Optionally, in some embodiments, the powertrain 1 of the heavy-duty vehicle 10 comprise a combustion engine 1. Here, in some embodiments, the one or more operating characteristics or conditions of one or more powertrain components comprise a change in fuel composition. In some embodiments, the set of vehicle powertrain operation parameter settings comprise one or more of: a predetermined setting of an injection system timing, a predetermined setting of an injection pressure, a predetermined setting of an injection strategy, a predetermined setting of intake- and exhaust pressures, and a predetermined setting of a charge air temperature.

Furthermore, the embodiments for detecting changes in operation of a powertrain 1 of a heavy-duty vehicle 10 described above may be implemented through one or more processors, such as the processing circuitry 310 in the control unit 110 depicted in FIG. 3, together with computer program code for performing the functions and actions of the examples herein. The program code mentioned above may also be provided as a computer program product, for instance in the form of a data carrier carrying computer program code or code means for performing the examples herein when being loaded into the processing circuitry 310 in the control unit 110. The computer program code may e.g. be provided as pure program code in the network system 300 or on a server and downloaded to the control unit 110. Thus, it should be noted that the modules of the control unit 110 may in some examples be implemented as computer programs stored in memory, e.g. in the memory modules 320 in FIG. 3, for execution by processors or processing modules, e.g. the processing circuitry 310 of FIG. 3. Those skilled in the art will also appreciate that the processing circuitry 310 and the memory 320 described above may refer to a combination of analog and digital circuits, and/or one or more processors configured with software and/or firmware, e.g. stored in a memory, that when executed by the one or more processors such as the processing circuitry 310 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

**FIG. 4** is a schematic diagram of a computer system 400 for implementing examples disclosed herein. The computer system 400 is adapted to execute instructions from a computer-readable medium to perform these and/or any of the functions or processing described herein. The computer system 400 may be connected (e.g., networked) to other machines in a LAN, an intranet, an extranet, or the Internet. While only a single device is illustrated, the computer system 400 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 400 may comprise at least one computing device or electronic device capable of including firmware, hardware, and/or executing software instructions to implement the functionality described herein. The computer system 400 may include processing circuitry 402 (e.g., processing circuitry including one or more processor devices or control units), a memory 404, and a system bus 406. The computer system 400 may include at least one computing device having the processing circuitry 402. The system bus 406 provides an interface for system components including, but not limited to, the memory 404 and the processing circuitry 402. The processing circuitry 402 may include any number of hardware components for conducting data or signal processing or for executing computer code stored in memory 404. The processing circuitry 402 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 402 may further include computer executable code that controls operation of the programmable device.

The system bus 406 may be any of several types of bus structures that may further interconnect to a memory bus (with or without a memory controller), a peripheral bus, and/or a local bus using any of a variety of bus architectures. The memory 404 may be one or more devices for storing data and/or computer code for completing or facilitating methods described herein. The memory 404 may include database components, object code components, script components, or other types of information structure for supporting the various activities herein. Any distributed or local memory device may be utilized with the systems and methods of this description. The memory 404 may be communicably connected to the processing circuitry 402 (e.g., via a circuit or any other wired, wireless, or network connection) and may include computer code for executing one or more processes described herein. The memory 404 may include non-volatile memory 408 (e.g., read-only memory (ROM), erasable programmable read-only memory (EPROM), electrically erasable programmable read-only memory (EEPROM), etc.), and volatile memory 410 (e.g., random-access memory (RAM)), or any other medium which can be used to carry or store desired program code in the form of machine-executable instructions or data structures, and which can be accessed by a computer or other machine with processing circuitry 402. A basic input/output system (BIOS) 412 may be stored in the non-volatile memory 408 and can include the basic routines that help to transfer information between elements within the computer system 400.

The computer system 400 may further include or be coupled to a non-transitory computer-readable storage medium such as the storage device 414, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 414 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 414 and/or in the volatile memory 410, which may include an operating system 416 and/or one or more program modules 418. All or a portion of the examples disclosed herein may be implemented as a computer program 420 stored on a transitory or non-transitory computer-usable or computer-readable storage medium (e.g., single medium or multiple media), such as the storage device 414, which includes complex programming instructions (e.g., complex computer-readable program code) to cause the processing circuitry 402 to carry out actions described herein. Thus, the computer-readable program code of the computer program 420 can comprise software instructions for implementing the functionality of the examples described herein when executed by the processing circuitry 402. In some examples, the storage device 414 may be a computer program product (e.g., readable storage medium) storing the computer program 420 thereon, where at least a portion of a computer program 420 may be loadable (e.g., into a processor) for implementing the functionality of the examples described herein when executed by the processing circuitry 402. The processing circuitry 402 may serve as a controller or control system for the computer system 400 that is to implement the functionality described herein.

The computer system 400 may include an input device interface 422 configured to receive input and selections to be communicated to the computer system 400 when executing instructions, such as from a keyboard, mouse, touch-sensitive surface, etc. Such input devices may be connected to the processing circuitry 402 through the input device interface 422 coupled to the system bus 406 but can be connected through other interfaces, such as a parallel port, an Institute of Electrical and Electronic Powertrainers (IEEE) 1394 serial port, a Universal Serial Bus (USB) port, an IR interface, and the like. The computer system 400 may include an output device interface 424 configured to forward output, such as to a display, a video display unit (e.g., a liquid crystal display (LCD) or a cathode ray tube (CRT)). The computer system 400 may include a communications interface 426 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer-implemented method for detecting changes in operation of a powertrain (1) of a heavy-duty vehicle (10) comprising a control unit (110), comprising:
*obtaining* (S1), by the control unit, information indicating that at least one powertrain sensor signal monitoring sequence is to be performed;
*obtaining* (S2), by the control unit, a set of vehicle powertrain operation parameter settings to be applied during the at least one powertrain sensor signal monitoring sequence;
*controlling* (S3), by the control unit, the operation of the powertrain (1) of the heavy-duty vehicle (10) according to the obtained set of vehicle powertrain operation parameter settings for a determined time period;
*determining* (S4), by the control unit, virtual sensor values based on sensor signals from one or more powertrain sensors (120), wherein the sensor signals are obtained during said determined time period; and
*detecting* (S5), by the control unit, a change in the operation of the powertrain (1) of the heavy-duty vehicle (10) in case the determined virtual sensor values indicate a different operation of the powertrain (1) of the heavy-duty vehicle (10) as compared to previously determined virtual sensor values using the same at least one powertrain sensor signal monitoring sequence.

2. The method according to claim 1, further comprising
*identifying* (S6), by the control unit, one or more operating characteristics or conditions of one or more powertrain components involved in the operation of the powertrain (1) of the heavy-duty vehicle (10) that is causing the detected change in the operation of the powertrain (1) of the heavy-duty vehicle (10); and
by the control unit, *providing* (S7), to a driver of the heavy-duty vehicle (10) and/or a remote vehicle monitoring system (50) to which the heavy-duty vehicle (10) is connected, information indicating the identified one or more operating characteristics or conditions of one or more powertrain components.

3. The method according to claims 1 or 2, further comprising by the control unit, *transmitting* (S8), to a remote vehicle monitoring system (50) to which the heavy-duty vehicle (10) is connected, information indicating the determined virtual sensor values.

4. The method according to claim 3, further comprising
by the control unit, *receiving* (S9), from the remote vehicle monitoring system (50), information indicating identified one or more operating characteristics or conditions of one or more powertrain components that is causing the detected change in the operation of the powertrain (1) of the heavy-duty vehicle (10); and
by the control unit, *providing* (S10), to a driver of the heavy-duty vehicle (10), information indicating the identified one or more operating characteristics or conditions of one or more powertrain components.

5. The method according to any of claims 1-4, wherein a machine learning model is trained to identify the one or more operating characteristics or conditions of one or more powertrain components involved in the operation of the powertrain (1) of the heavy-duty vehicle (10) that is causing the detected change in the operation of the powertrain (1) of the heavy-duty vehicle (10) based the determined virtual sensor values and the previously determined virtual sensor values.

6. The method according to any of claims 1-5, wherein each of the at least one powertrain sensor signal monitoring sequence is associated with a determined time period, information indicating the virtual sensor values to be determined based on the sensor signals, and a set of vehicle powertrain operation parameter settings.

7. The method according to any of claims 1-6, wherein the one or more operating characteristics or conditions of one or more powertrain components comprise damaged or malfunctioning powertrain components.

8. The method according to any of claims 1-7, wherein the powertrain (1) of the heavy-duty vehicle (10) is a battery-electric or fuel-cell electric powertrain.

9. The method according to any of claims 1-7, wherein the powertrain (1) of the heavy-duty vehicle (10) comprise a combustion engine (1).

10. The method according to claim 9, wherein the one or more operating characteristics or conditions of one or more powertrain components comprise a change in fuel composition.

11. The method according to claim 9 or 10, wherein the set of vehicle powertrain operation parameter settings comprise one or more of: a predetermined setting of an injection system timing, a predetermined setting of an injection pressure, a predetermined setting of an injection strategy, a predetermined setting of intake- and exhaust pressures, and a predetermined setting of a charge air temperature.

12. A control unit (110) for detecting changes in operation of a powertrain (1) of a heavy-duty vehicle (10), wherein the control unit (110) comprise a processing circuitry (310) and a memory (320), the processing circuitry (310) being configured to
obtain information indicating that at least one powertrain sensor signal monitoring sequence is to be performed, obtain a set of vehicle powertrain operation parameter settings to be applied during the at least one powertrain sensor signal monitoring sequence, control the operation of the powertrain (1) of the heavy-duty vehicle (10) according to the obtained set of vehicle powertrain operation parameter settings for a determined time period, determine virtual sensor values based on sensor signals from one or more powertrain sensors (120), wherein the sensor signals are obtained during said determined time period, and detect a change in the operation of the powertrain (1) of the heavy-duty vehicle (10) in case the determined virtual sensor values indicate a different operation of the powertrain (1) of the heavy-duty vehicle (10) as compared to previously determined virtual sensor values using the same at least one powertrain sensor signal monitoring sequence.

13. The control unit (110) according to claim 12, wherein the processing circuitry (310) is further configured to identify one or more operating characteristics or conditions of one or more powertrain components involved in the operation of the powertrain (1) of the heavy-duty vehicle (10) that is causing the detected change in the operation of the powertrain (1) of the heavy-duty vehicle (10), and provide, to a driver of the heavy-duty vehicle (10) and/or a remote vehicle monitoring system (50) to which the heavy-duty vehicle (10) is connected, information indicating the identified one or more operating characteristics or conditions of one or more powertrain components.

14. A computer program product comprising program code for performing, when executed by a processing circuitry (310) of a control unit, ECU (110), on-board a heavy-duty vehicle (10), the method of any of claims 1-11.

15. A non-transitory computer-readable storage medium comprising instructions, which when executed by a processing circuitry (310) of a control unit, ECU (110), on-board a heavy-duty vehicle (10), cause the processing circuitry (310) to perform the method of any of claims 1-11.
